# EUROPEAN PATENT APPLICATION

(11) **EP 3 971 813 A1**
(43) Date of publication of application: **23.03.2022**
(21) Application number: 20196576.1
(22) Date of filing: 17.09.2020
(51) Int. Cl.: G06Q 30/06, A41H 1/02, A41H 43/00

(54) **METHOD AND SYSTEM FOR GARMENT MATCHING**

(71) Applicant: Sizenot AB, 222 22 Lund (SE)
(72) Inventor: Dahlin, Christina Ingeborg, 222 22 Lund (SE); Berg, Maria Anna, 275 66 Vollsjö (SE); Berglund, Björn Axel, 224 74 Lund (SE); Haapamäki, Kim Valdemar, 224 79 Lund (SE); Hansson, Anders Fredrik, 227 38 Lund (SE); Cavallin, Fritjof, 371 40 Karlskrona (SE)
(74) Representative: Hansson Thyresson AB

(57) **Abstract**

The present invention relates to a method and system for matching an individual to a specific size of a selected garment. The invention being arranged to receive a selection identifying the garment, receive at least one body measure of a feature of the individual, receive a measure of ease for at least one garment feature measure, the measure of ease being based on the difference between a measure in a base body measure list used during the design of the garment and a corresponding measure in a garment measure list specifying measures of the garment at the size represented by the base body measure list, calculate a value for a desired garment measure for the at least one garment feature by adjusting the value of the body measure of the individual corresponding to the at least one garment feature required to be measured by the measure of ease, match the value of the desired garment measure of the at least one garment feature to a specific size of the garment represented in the garment measure list, the garment measure list including a plurality of measures of the garment at a plurality of sizes of the specific garment, and generate an identifier representing the size resulting from the matching.

## Description

### TECHNICAL FIELD

The present invention relates to a method and system for matching an individual to a specific size of a selected garment.

### BACKGROUND

Shopping for merchandise remotely, e.g. via e-commerce business or mail order business, has increased in popularity with the introduction of shopping via the Internet and is becoming a greater and greater part of the shopping habits of people. The simplicity of these types of remote shopping are one of the things that probably appeal to people using these services. One drawback of these services is that the person shopping does not have the possibility to touch and feel the merchandise before ordering. When it comes to shopping garments, e.g. clothes like shirts, sweaters, skirts, trousers, blouses, shorts, dresses, jackets, coats, overalls, suits, T-shirts, tops, etc., one obvious drawback is that the person buying does not have the possibility to try the garment on before buying. In the prior art one way to address this problem is by providing tailored garment from body measurements made by the person shopping, i.e. the user. However, this approach is not viable on prefabricated garments made in a couple of predetermined sizes. Hence, there is a need for a system helping a shopper for garments from these remote shopping sites to arrive at the best fitting size for the garment of interest. From the above it is understood that there is room for improvements and the invention aims to solve or at least mitigate the above and other problems.

### SUMMARY

The object of the present invention is at least to facilitate selection of a garment size for a specific individual.

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims or may be learned by the practice of the disclosed concepts as set forth herein.

In a first aspect a method for matching an individual to a specific size of a selected garment, comprises receiving a selection identifying the garment, receiving at least one body measure of a feature of the individual, receiving a measure of ease for at least one garment feature measure, the measure of ease being based on the difference between a measure in a base body measure list used during the design of the garment and a corresponding measure in a garment measure list specifying measures of the garment at the size represented by the base body measure list, calculating a value for a desired garment measure for the at least one garment feature by adjusting the value of the body measure of the individual corresponding to the at least one garment feature required to be measured by the measure of ease, matching the value of the desired garment measure of the at least one garment feature to a specific size of the garment represented in the garment measure list, the garment measure list including a plurality of measures of the garment at a plurality of sizes of the specific garment, and generating an identifier representing the size resulting from the matching. One advantage of matching measures of the individual to the measures of the sizes in a garment measure list is that the chances of a successful matching of a garment size to the individual are increased and that the chances of such a successful matching are increased when the measure of ease designed for the garment is considered.

In some embodiments the receiving of a measure of ease includes calculating the ease for the at least one garment feature as the difference between the corresponding measure in a base body measure list used during the design of the garment and the corresponding measure in a garment measure list specifying measures of the garment at the size represented by the base body measure list.

In further embodiments the difference is calculated as the relative difference between the corresponding measure in a base body measure list used during the design of the garment and the corresponding measure in a garment measure list specifying measures of the garment at the size represented by the base body measure list.

In yet further embodiments the difference is calculated as the absolute difference between the corresponding measure in a base body measure list used during the design of the garment and the corresponding measure in a garment measure list specifying measures of the garment at the size represented by the base body measure list.

Some embodiments further includes identifying at least one garment feature of the identified garment for which a measure is required, the measure of ease received being the measure of ease for the at least one garment feature of the identified garment for which a measure is required and the desired garment measure is calculated for the at least one garment feature of the identified garment for which a measure is required.

In some embodiments the identifying of the at least one garment feature includes identifying a plurality of garment features required to be measured, and wherein the retrieving of a measure of ease, the calculating of a value for a desired garment measure and the matching of the value for the desired garment measure to a specific size is performed for each garment feature required to be measured.

In further embodiments the identifying of the garment feature for which a measure is required includes classifying the garment as being of a particular class of garments and then retrieving the information of which garment feature that is determined to be required for the particular class of garments.

In yet further embodiments the identifying of the garment feature for which a measure is required includes parsing through the garment measure list for an identification marking a garment feature for which a measure is required.

In some embodiments a plurality of body measures of features of the individual are received in the step of receiving at least one body measure, wherein the measure of ease for a plurality of garment feature measures are received in the step of receiving a measure of ease for at least one garment feature measure, wherein the value for a desired garment measure is calculated for a plurality of the garment features for which a body measure and a measure of ease have been received, and wherein the matching the value of the desired garment measures includes finding the garment size for which the difference between the desired measures and the measures in the garment measure list for the corresponding measures are the smallest. An advantage of these steps is that chance of matching a garment size that fit the individual increases.

In further embodiments garment sizes for which a measure of a feature in the garment measure list is smaller than 60% of the measure of ease added to the body measure for that feature are indicated as not being suitable matches. The advantage of considering garments having at least some measures smaller than corresponding measures of ease is that the chances of matching the garment of the optimal size for the user is increased.

According to yet further embodiments the finding of the garment size for which the differences between the desired measure and the measures in the garment measure list for the corresponding measures are the smallest is based on minimum square calculations on the differences.

Further, the received body measures may be received from a body measure scan.

In some embodiments the method further comprises storing received body measures, receiving information of returned garment being marked as not fitting properly, retrieving the garment measurements from the garment measure list of the returned garment, and adjusting stored individual body measures based on the information the returned garment and the measure of ease of the returned garment.

In further embodiments the method comprises storing received body measures, receiving information of ordered garment being marked as fitting properly, retrieving the garment measurements from the garment measure list of the garment, and adjusting stored individual body measures based on the information the garment and the measure of ease of the garment.

According to another aspect of the invention a garment ordering system including means to perform any of the steps described above.

The terminology used in the following description is for purpose of describing particular embodiments and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a processor" or "the processor" may include several processors, and the like. Furthermore, the word "comprising" does not exclude other elements or steps.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: is a schematic figure over how a system according to some embodiments of the invention may be arranged,
- Fig. 2: is a flowchart depicting a process for matching an individual to a particular size of a selected garment according to embodiments of the invention,
- Fig. 3: is a flowchart depicting a process for matching an individual to a particular size of a selected garment according to other embodiments of the invention,
- Fig. 4: is a flowchart depicting a method of matching measures of an individual to garment measures in a garment measure chart,
- Fig. 5: is showing an example of a garment measure chart, and
- Fig. 6: is showing a flat sketch of a dress relating to the garment measure chart of Fig. 5.

Further, in the figures like reference characters designate like or corresponding parts throughout the several figures.

### DETAILED DESCRIPTION

The present invention relates to a method and a system for matching an individual to a particular size of a selected garment. According to some embodiments the method and system relates to assisting an individual, e.g. a user, a person, etc., to order garments in correct sizes from a store that the individual does not have direct physical access to, e.g. a mail order shop, a web shop, an e-commerce site. The garments in the store are, thus, not directly accessible for testing different sizes of garments. According to some embodiments the method and system may be used in a physical store to improve the shopping experience of an individual by facilitate the selection of garment sizes. In other embodiments the method and system may be used in a system where the garment is sent to the user as a specification to be locally printed or locally produced in any other possible way.

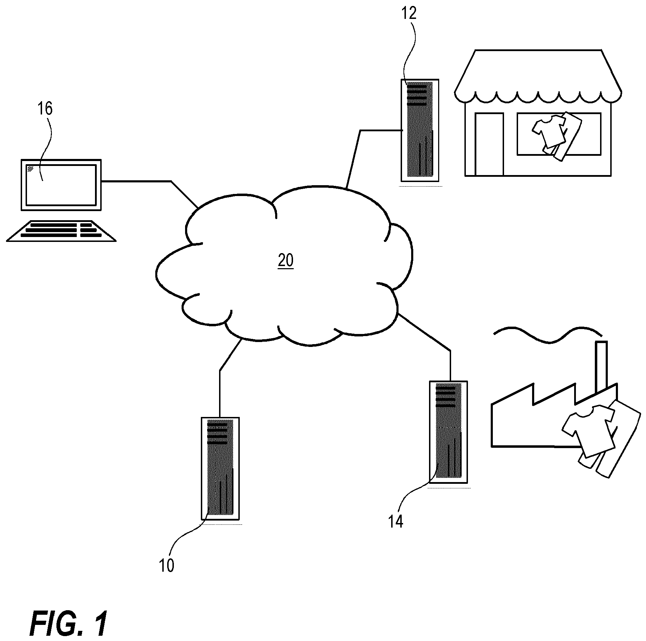

Now referring to Fig. 1, a system according to some embodiments of the invention includes a service, running on a server 10, for determining the size of a garment for a specified individual. The server may be a server 10 running at a provider of the size matching service according to the invention, it may be a server operating in the cloud running the size matching service for a provider of the size matching service. Alternatively, the server running the size matching service is a server 12 at a garment vendor or a server operating in the cloud running the size matching service for the garment vendor. Yet another alternative is that the server running the size matching service is a server 14 at a garment producer or a server operating in the cloud running the size matching service for the garment producer.

The size matching service running on at least one of the servers 10, 12 and 14, receives information such as garment selections and body measures of the individual that the selected garment is intended to fit from a client computer 16. The client computer 16 may be any computing device enabled to receive user input and send information to servers via a network 20. Accordingly, the client computer may for instance be a personal computer PC, a handheld computing device, a mobile phone, a tablet, a workstation, etc. The communication network 20 may be the Internet or any other type of communication network allowing communication over greater areas such as cities, regions, states, countries, globally etc. The client computer may be a computing device of the user or it may be a computer provided by a garment vendor at a garment shop of the vendor.

The server 10, 12, 14, running the service may be any type of server, computer, etc. connected to the network 20 for continuously serving requests from clients 16. The result from a size matching in the size matching service may be returned to the client 16 and be included in an order of the garment at the client or, alternatively, the size matching service may send the size information for the specific garment to a vendor or a production facility providing an identifier identifying the presently handled order of a garment.

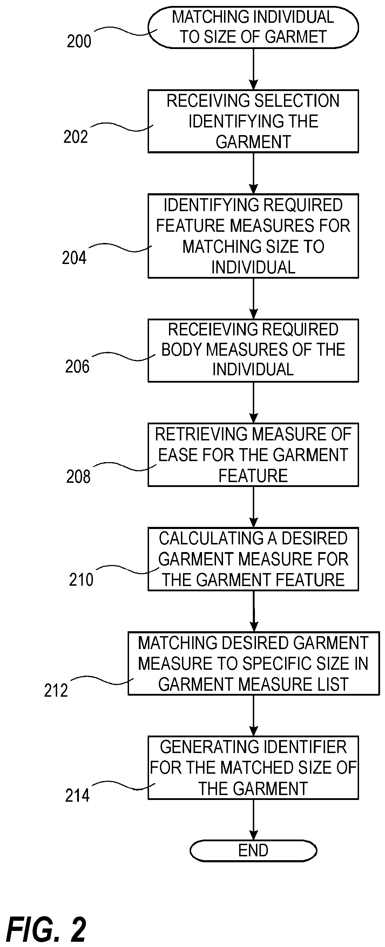

Now referring to Fig. 2, describing a process of the size matching service 200 according to some embodiments of the invention. The process starts by a user of a client identifying a garment of interest in a presentation of garments. The presentation of garments may be on a web site for selling garments, in a publication, e.g. a catalogue of another presentation. The user makes a selection of the garment, which is sent to the size matching service, e.g. via an interface at the website or by sending a message to the service in any means contemplated by the skilled person. The size matching service receives an identifier identifying the selection of the garment of interest, step 202. From this identifier the size matching service determines the required measures for that particular garment, step 204, i.e. the features of the individual that the size matching service requires to have measures for in order to determining the size for the individual in view of the selected garment, also referred to as garment feature measure in the context of this application. For some garments, the size matching service only requires measures of one feature of the individual for determining a recommended size. Then the size matching service may request and receive the measures of the required features of the individual, step 206, from the user by sending the request to the client and having the user measure and enter the measures of the required features. Alternatively, body measures of the individual are already stored in a database of the vendor or a database related to the size matching service in another way. In such implementations the size matching service may request and receive the relevant measures, i.e. the measures of the required features, from this system instead. The body measure database storing the body measures of individuals that have signed up for using the system may be included in a user database including specific information of the individual, e.g. various measures of features of the user, contact information, name, invoice information, etc.

The size matching service also retrieves a measure of ease for the measure of required features of the garment, step 208. The measure of ease for a specific feature of the garment may be pre-calculated and stored in a garment measure list for the specific garment. The garment measure list may be a garment measure chart or may be a part of a garment measure chart. In the rest of the description the term garment measure chart will be used with the intention of representing both these alternatives. Alternatively, the measure of ease is calculated from data in a base body measure list and the garment measure chart. The base body measure list is a list of body measures, i.e. measures of various features of a body relevant for garment production, representing at least one size. The base body measure list may include measures for bodies representing further sizes as well. These measures of the features of, at least for the specific producer, "standardized" body measures are used as a base for designing the garments of at least that specific producer. The garment measure chart, which may be included in a garment specification, garment chart or any other such types of lists or specifications, includes the unique measures of features of the specific garment. The calculation of the measure of ease ME*ᵢ* may then be calculated as the difference between the measure G*ᵢ* of a feature in the garment measure chart and the measure of a corresponding body feature B*ᵢ* in the base body measure list. Wherein the index i indicates the feature that the measure relates to. The measure of ease ME*ᵢ* may be a value relating to an absolute difference MEa*ᵢ*, e.g. represented by a unit of length, e.g. mm, cm, inch, or any other unit representing distance, and may be calculated as MEa*ᵢ*=G*ᵢ*-B*ᵢ*, or may be a value relating to a relative difference MEr*ᵢ*, e.g. represented by a unit of percentage or ratio, and be calculated as MEr*ᵢ*=G*ᵢ*/B*ᵢ*. The term "difference" should for interpreted as encompassing both absolute differences and relative differences, unless specified as a specific one of these.

When an ease for the measures of the relevant features of the garment have been retrieved, and possibly calculated, a desired garment measure D*ᵢ* is calculated, step 210, by adjusting the measures I of the required features of the individual with a value based on the corresponding measure of ease MEa*ᵢ*, MEr*ᵢ*. The desired garment measure D*ᵢ* may according to some embodiments be calculated by using the absolute measure of ease MEa*ᵢ*, D*ᵢ* = MEa*ᵢ* + I*ᵢ*, or the relative measure of ease MEr*ᵢ*, D*ᵢ* = MEr*ᵢ* x I*ᵢ*.

The calculated desired garment measures are measures that probably would have been used if the garment would have been tailored for the individual. However, as the garment of interest has been produced at discrete sizes the desired garment measures are not likely to have all the same measures, if any, as the measures of any one of the particular sizes in the garment measure chart. Hence, the desired garment measures are matched to the corresponding garment measures of a specific size in the garment measure chart in order to find out the most suitable size of this particular garment for the individual, step 212, various methods of matching is described below. When the individual has been matched to a size of that particular garment, i.e. the desired garment measures have been matched to the garment measures of a specific size, then an identifier representing the size of the garment is generated, step 214. This identifier may then be sent to the shopping site for automatic selection or it may be presented for the user for manual selection.

The base body measure list, thus, is a list listing the body measures for specific features of a standard body. The list may for instance include at least the measures of some of the features in the following group of body measures: chest width, bust width, waist width, neck width, seat width, hip width, inner leg length, thigh width, outer leg length, arm length, upper arm width, crutch length, shoulder length, shoulder width, back length, wrist width etc. The base body measure list is used as a basis for constructing a garment and in particular for constructing the sewing pattern for the garment. The sewing pattern being a collection of images wherein each image depicts a cutout shape for a specific portion or section of a garment and may be used as templates for cutting each portion or section. Usually the base body measure list differs between different garment producers, i.e. the standard body may vary from producer to producer. In addition, the base body measure lists often varies depending on where in the world you are. Hence, when the base body measure list is used in the process described above the base body measure list of the producer of the garment should be used.

The garment measure chart is a list specifying the measures of the garment for features corresponding to at least some features of the base body measure list. The garment measure charts include measures of the features for the various sizes that are produced, e.g. for S, M, L, for 36, 38, 40, 42, 44, 46, or for any such extended list of sizes. According to some embodiments of the invention the garment measure chart also includes a measure of ease for at least one of the sizes and in some embodiments for the garment measure chart includes a measure of ease for each of the sizes in the garment measure chart. The measure of ease may be provided for one feature, all features, or a subset of the features.

Further, according to some embodiments of the invention, the garment measure chart includes an indication of the relevance of the feature for the garment, this indication may also indicate if the measure is required or not. The relevance of the features may be graded for level of importance. For instance, the most relevant measure for a shirt, dress, or other top may be, in order of relevance, 1. the chest width, 2. the seat width, and then 3. the sleeve length, all depending on the design and intention of the garment designer. In order to clarify the terms used in this description a measure may be a chest width, a seat width, a sleeve length, an arm length, etc. Moreover, a garment feature and corresponding body feature may be chest/chest, seat/seat, sleeve/arm.

The garment measure chart may be included in a garment specification which then often also includes a flat sketch of the garment. The flat sketch then often presents dimensions, i.e. measures, and reference numerals for the various features of the garment.

According to other embodiments a garment is classified as belonging to a particular class of garment, e.g. shirts, sweaters, skirts, trousers, blouses, shorts, dresses, jackets, coats, overalls, suits, T-shirts, tops, etc. Then, for each class at least one required feature is defined or a plurality of features, which then may be provided with an indication of order of relevance, as described above. In such embodiments the process of identifying required features may initially identify the class of the selected garment. This may be achieved by reading an identifier connected to the garment measure chart, by automatically interpreting the name of the garment or a text describing the garment, etc.

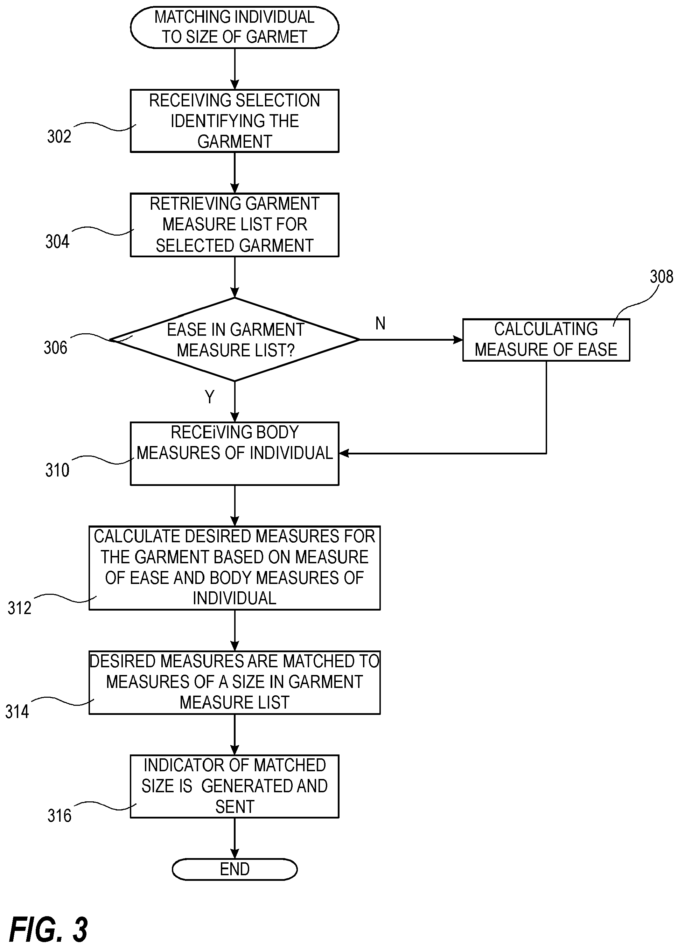

Now referring to Fig. 3 depicting a flowchart describing alternative embodiments of the process of the size matching service, some of the steps are identical or exchangeable for the steps previously described. The process starts when a user selects a garment of interest for an individual and the selection is sent to and received by the size matching service, step 302, the user and the individual are not necessary the same person. Then the size matching service retrieves the garment measure chart for the selected garment, step 304, and if, step 306, the garment measure chart does not already include a relative measure of ease MEr*ᵢ* then the base body measure list used in designing the garment is retrieved as well and the relative measures of ease MEr*ᵢ* are calculated for corresponding features of the two lists having entries in the garment measure chart and the base body measure list, step 308. The relative measure of ease MEr*ᵢ* may be calculated for all the features having entries in both the garment measure chart and the base body measure list. Body measures of the individual are retrieved, step 310, either from a data base storing body measures of the individual or from an interface where the user input the body measures. This step of retrieving the body measures may alternatively be performed before the retrieval of the measures of the relative measure of ease Mer, steps 304 or 308, or the retrieval of the garment measure chart, step 304. This act may even be performed before the selection of the garment.

Then, when the body measures of the individual and the relative measure of ease MEr*ᵢ* are available for the features in question, the relative measure of ease MEr*ᵢ* for each feature for which the relative measure of ease MEr*ᵢ* has been calculated is multiplied with the measure of the corresponding feature from the measures I of the individual in order to arrive at a desired measure D*ᵢ* for each feature, e.g. D*ᵢ* = MEr*ᵢ* x I*ᵢ* for each feature, step 312. Thus, the desired measures D*ᵢ* of the selected garment for the specific individual are generated. These desired garment measures D*ᵢ* may be arranged in a list or an array. When the desired garment measures have been calculated the desired garment measures calculated for the features are matched to measures of a specific size of the garment defined in the garment measure chart, 314. Then an indicator of the size of the garment that is the best match will be generated and sent to the user, to the shopping site, or directly to an ordering system, step 316.

According to alternative embodiments the garment matching service may implement a method in which the relative measure of ease may be calculated for a subset of the features that have entries in both the garment measure chart and the base body measure list. The features of such a subset may be predetermined and may differ between different garment types, e.g. the features of the subset may differ between a shirt and a skirt.

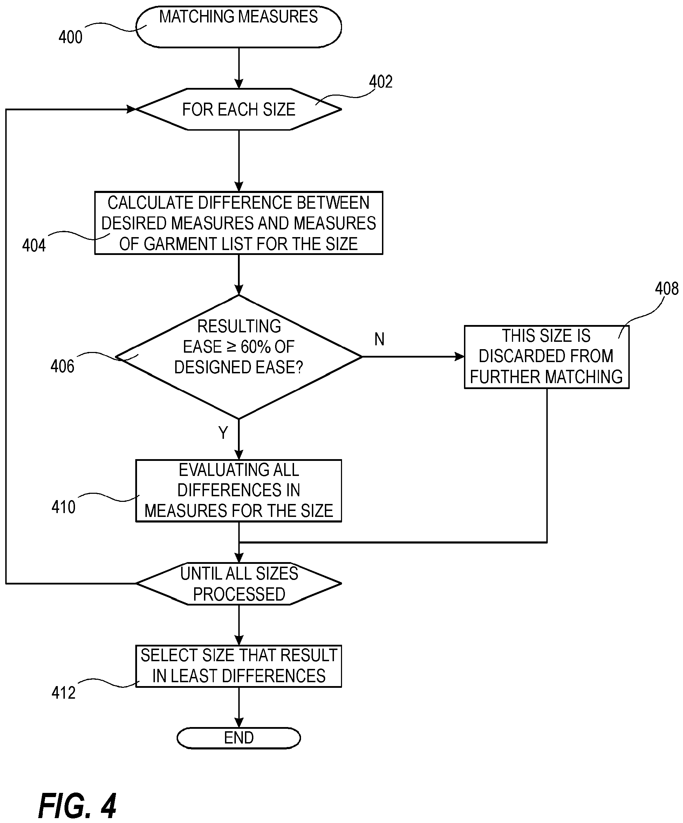

Now referring to Fig. 4, relating to embodiments of the process of matching 400 the desired measures D*ᵢ* discussed in any earlier embodiments to measures of a size in the garment list for the specific garment. The matching of the desired measures D*ᵢ* to a size of the selected garment may be performed for each size, step 402. The processing of each size includes calculating the difference between the desired measures D*ᵢ* and their corresponding measure G*ᵢ* in the garment measure chart for each size in the garment measure chart or for a subset of sizes in the garment measure chart, step 404. If such a difference is indicating that the desired measure D*ᵢ* is larger than the measure G*ᵢ* of the garment list, e.g. the difference is positive, then this feature of the garment is smaller for the individual than intended by the designer and could, according to some embodiments, be considered to be too small. However, according to the embodiments of Fig. 4 the ease of this feature for the individual is calculated and if the ease of this feature for the individual is at least 60% of the ease intended by the designer, step 406, which is either retrieved from the garment measure chart or calculated as described earlier, the measure of the feature is deemed to be too small and the size relating to the particular garment measure is discarded from further consideration, step 408.

For the sizes that is not discarded the difference between the desired measures D*ᵢ* and the measure in the garment list of the corresponding feature is evaluated for each size and the size resulting in the least difference between the desired measures D*ᵢ* and the measures of a particular size in the garment list is determined to be the best match, step 410. According to some embodiments this analysis includes calculating a total difference value for each size by adding all the difference values for each size. Then the size having the least total difference value is selected as the best match, step 412. According to some embodiments the minimum mean square method may be used for finding the size that minimize the difference according to this method and then determine the found size to be the best match. A person skilled in the art would, based on this description, be able to find alternative methods for matching the determined measures D*ᵢ* of a user to a size of a garment.

Instead of evaluating the difference between the desired measures D*ᵢ* and the measure G*ᵢ* in the garment list of the corresponding feature, some embodiments may implement a relative value instead. In such implementation the ratio between the body measure I*ᵢ* of a feature of the individual is divided by the measure G*ᵢ* of the corresponding feature in the garment measure chart, this ratio is herein referred to as the individual measure ratio IMr*ᵢ*, and the ratio between the measures of the corresponding features of the base body measure list and the measure of the feature in the garment measure chart, this ratio is herein referred to as the size measure ratio SMr*ᵢ*. The matching of a particular size to the body measures of the individual is then made by finding the size resulting in the smallest difference between these ratios, e.g. minimizing IMr*ᵢ* - SMr*ᵢ*, IMr*ᵢ* / SMr*ᵢ*, an absolute value of IMr*ᵢ* - SMr*ᵢ*. This could be achieved in any way described earlier.

The step of matching desired garment measure to a specific size in the garment measure chart may also include considerations of various levels of relevance, as described in connection with Fig. 2. The level of relevance for the measures of a garment measure chart may be stored in the list. The levels may be indicated as first level of interest, second level of interest, third level of interest, etc. An indicator indicating that the measure is of no interest may be used as well. These, various levels of interest may be incorporated in the matching process where the highest level, e.g. the first level, is higher valued than the second level.

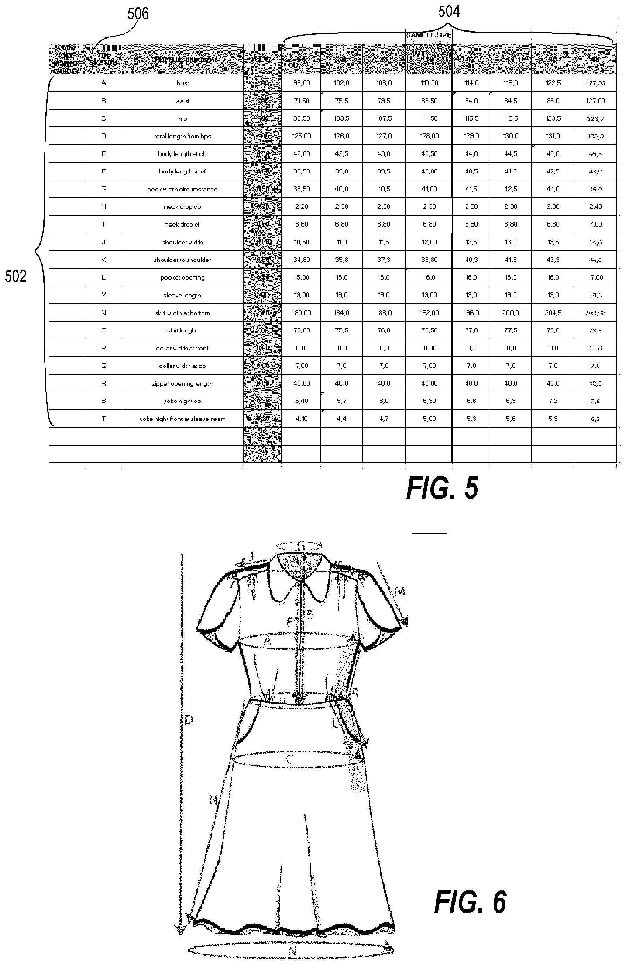

In Fig. 5 an example of a garment measure chart 500 of a dress is depicted. The chart is presenting rows 502 for measures G*ᵢ* of each of the features for various sizes. Each size being represented in one of a size defining column 504. The index of each feature i, discussed earlier, is presented in the index column 506, having the heading "ON SKETCH" and in this example the column indicates indexes ranging in alphabetic order from A-T, i.e. *i*=*{A, B, C, D,* ... , *Q, R, S, T}*.

In Fig. 6 a flat sketch of the dress of the garment measure chart 500 is depicted. In the figure the position of each measure G*ᵢ* of a feature i from the column 502 of the garment measure chart 500 is indicated with dimension lines and the index of the corresponding feature.

In any of the examples above the receiving of the individual's body measures is important in order to find a suitable size for the individual. The Input of body measures of the individual for which to match a size of a garment may be performed in one of many ways. For instance, the user, who may be the same person as the individual for whom the garment is to be matched, may measure relevant features of the body by using a tape measure or any such measuring means. The user may then be asked to provide the relevant features who then key in the measured value for each measured feature in an interface on a client. Other ways of provide the measures are to use a body scanner of some type that either capture images of the individual for analyzing and generating measures or for generating a 3D model of the individual from which the measures may be extracted.

Relevant features for a specific type of garment may be inputted or more general relevant features, that may be stored in a user profile for use when ordering different types of garments and at different points in time, may be inputted. A profile including the relevant measures of the individual may be advantageous in a system that is arranged to continuously strive to make the measures be adapted to the individual. In some embodiments this is achieved by tracking the returns of garments from the user. If the user note in the return that the garment was too tight over some feature or too short in view of some feature the measures of these features of the individual may be adjusted by the system to a measure of greater width or length by adding to the measure in the profile. If the user in the return comment on that the garment was too wide or too long in view of a particular feature the measure of the feature of the individual are correspondingly adjusted in the profile to a measure of lesser width or length.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices, whether internal, networked or cloud based.

Software embodiments includes computer program instructions that may be loaded onto a general-purpose computer, special purpose computer, or other programmable data processing apparatus to perform functions and/or operations of the present invention. Some embodiments of the invention may also be related to a non-transitory computer-readable medium storing processor-executable instruction performing a method according to the invention defined by the claims.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing a function and/or operation of the present invention. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Blocks of the block diagrams and flowchart illustrations support combinations of means for performing specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

## Claims

1. Method for matching an individual to a specific size of a selected garment, comprising:
receiving a selection identifying the garment,
receiving at least one body measure of a feature of the individual,
receiving a measure of ease for at least one garment feature measure, the measure of ease being based on the difference between a measure in a base body measure list used during the design of the garment and a corresponding measure in a garment measure list specifying measures of the garment at the size represented by the base body measure list,
calculating a value for a desired garment measure for the at least one garment feature by adjusting the value of the body measure of the individual corresponding to the at least one garment feature required to be measured by the measure of ease,
matching the value of the desired garment measure of the at least one garment feature to a specific size of the garment represented in the garment measure list, the garment measure list including a plurality of measures of the garment at a plurality of sizes of the specific garment, and
generating an identifier representing the size resulting from the matching.

2. The method according to claim 1, wherein the receiving of a measure of ease includes calculating the ease for the at least one garment feature as the difference between the corresponding measure in a base body measure list used during the design of the garment and the corresponding measure in a garment measure list specifying measures of the garment at the size represented by the base body measure list.

3. The method according to claim 2, wherein the difference is calculated as the relative difference between the corresponding measure in a base body measure list used during the design of the garment and the corresponding measure in a garment measure list specifying measures of the garment at the size represented by the base body measure list.

4. The method according to claim 2, wherein the difference is calculated as the absolute difference between the corresponding measure in a base body measure list used during the design of the garment and the corresponding measure in a garment measure list specifying measures of the garment at the size represented by the base body measure list.

5. The method according to any one of claims 1-4, further including identifying at least one garment feature of the identified garment for which a measure is required, the measure of ease received being the measure of ease for the at least one garment feature of the identified garment for which a measure is required and the desired garment measure is calculated for the at least one garment feature of the identified garment for which a measure is required.

6. The method according claim 5, wherein the identifying of the at least one garment feature includes identifying a plurality of garment features required to be measured, and wherein the retrieving of a measure of ease, the calculating of a value for a desired garment measure and the matching of the value for the desired garment measure to a specific size is performed for each garment feature required to be measured.

7. The method according to any one of claims 5-6, wherein identifying the garment feature for which a measure is required includes classifying the garment as being of a particular class of garments and then retrieving the information of which garment feature that is determined to be required for the particular class of garments.

8. The method according to any one of claims 5-6, wherein identifying the garment feature for which a measure is required includes parsing through the garment measure list for an identification marking a garment feature for which a measure is required.

9. The method according to any one of claims 1-4, wherein a plurality of body measures of features of the individual are received in the step of receiving at least one body measure, wherein the measure of ease for a plurality of garment feature measures are received in the step of receiving a measure of ease for at least one garment feature measure, wherein the value for a desired garment measure is calculated for a plurality of the garment features for which a body measure and a measure of ease have been received, and wherein the matching the value of the desired garment measures includes finding the garment size for which the difference between the desired measures and the measures in the garment measure list for the corresponding measures are the smallest.

10. The method according to claim 9, wherein garment sizes for which a measure of a feature in the garment measure list is smaller than 60% of the measure of ease added to the body measure for that feature are indicated as not being suitable matches.

11. The method according to any one of claims 9-10, wherein the finding of the garment size for which the differences between the desired measure and the measures in the garment measure list for the corresponding measures are the smallest is based on minimum square calculations on the differences.

12. The method according to any one of claims 1-11, wherein the received body measures are received from a body measure scan.

13. The method according to any one of claims 1-12, further comprising:
storing received body measures,
receiving information of returned garment being marked as not fitting properly,
retrieving the garment measurements from the garment measure list of the returned garment, and
adjusting stored individual body measures based on the information the returned garment and the measure of ease of the returned garment.

14. The method according to any one of claims 1-13, further comprising:
storing received body measures,
receiving information of ordered garment being marked as fitting properly,
retrieving the garment measurements from the garment measure list of the garment, and
adjusting stored individual body measures based on the information the garment and the measure of ease of the garment.

15. A garment ordering system including means to perform the steps of any one of claims 1-14
